# EUROPÄISCHE PATENTSCHRIFT

(11) **EP 3 287 215 B1**
(45) Veröffentlichungstag und Bekanntmachung des Hinweises auf die Patenterteilung: **07.10.2020**
(21) Anmeldenummer: 17181709.1
(22) Anmeldetag: 17.07.2017
(51) Int. Cl.: B23B 35/00, B23P 15/10, F02F 3/00, F16C 33/10, F16J 1/16, F16J 1/08

(54) **VERFAHREN ZUM HERSTELLEN EINER RILLENSTRUKTUR IN EINER INNENOBERFLÄCHE EINES KOLBENS**
METHOD FOR PRODUCING A GROOVE STRUCTURE IN AN INTERNAL SURFACE OF A PISTON
PROCÉDÉ DE FABRICATION D'UNE STRUCTURE RAINURÉE DANS UNE SURFACE INTÉRIEURE D'UN PISTON

(30) Priorität: 17.08.2016 DE 102016215404
(43) Veröffentlichungstag der Anmeldung: 28.02.2018
(73) Patentinhaber: Mahle International GmbH, 70376 Stuttgart (DE)
(72) Erfinder: MEISER, Johann, 70469 Stuttgart (DE)
(74) Vertreter: BRP Renaud & Partner mbB Rechtsanwälte Patentanwälte Steuerberater

(56) Entgegenhaltungen:
- AT-B- 198 069
- GB-A- 2 023 238
- US-A- 2 566 080
- US-A- 3 023 060
- US-A1- 2003 150 112
- US-A1- 2010 329 801

## Beschreibung

Die vorliegende Erfindung betrifft ein Verfahren zum Herstellen einer Rillenstruktur in einer Innenoberfläche einer Bolzenbohrung eines Kolbens, gemäß dem Oberbegriff des Anspruchs 1. Ein solches Verfahren ist aus der US 3,023,060 A bekannt.

Kolben weisen üblicherweise zumindest eine Bolzenbohrung auf, in der ein Bolzen, beispielsweise zwecks Verbindung mit einem Pleuel, drehbar gelagert ist. Um die im Betrieb herrschenden hohen Lasten zu tragen, ist es wünschenswert, eine Oberfläche der Bolzenbohrung möglichst glatt auszubilden. Dies führt zwar zur besagten besseren Tragfähigkeit der Bolzenbohrung, jedoch wirken sich derartig ebene Oberflächen negativ auf die Versorgung der Bolzenbohrung mit einem Schmiermittel aus, das zum Schmieren zwischen dem Kolben und dem Bolzen gebraucht wird. Um eine bessere Schmierung zu erzielen, ist es bekannt, die Oberfläche der Bolzenbohrung mit Rillen zu versehen, die als Speicher für das Schmiermittel dienen und somit die Schmierung verbessern. Das Versehen der Oberfläche mit derartigen Rillen verkleinert dabei den Anteil der glatt ausgebildeten Oberfläche und somit die Trageeigenschaften der Oberfläche. Zudem bieten derartige Rillen eine unzureichende Speicherung von Schmiermittel.

Zum Lösen dieses Problems schlagen die DE 10 2006 050 246 A1 und die US 6,089,756 A vor, die Oberfläche der Bolzenbohrung mit einer Rillenstruktur zu versehen, die tiefe Rillen und weniger tiefe Rillen aufweist. Beide Rillenarten dienen dabei der Speicherung des Schmiermittels, wobei die weniger tiefen Rillen mehr zur Tragefähigkeit der Oberfläche beitragen. Bei diesen Kolben sind die Rillen der Rillenstruktur parallel angeordnet bzw. verlaufen parallel. Auch kann die Tiefe der jeweiligen Rille entlang der zugehörigen Rille variieren.

Aus der DE 44 42 218 A1 ist eine Feinbohrmaschine zur Erzeugung von Formbohrungen mit nicht zylindrischer Geometrie bekannt, bei denen der Bohrungsradius durch geeignete Ansteuerung in Umfangsrichtung (Ovalität) und/oder Axialrichtung (Trompetenform) variiert werden kann. Die Feinbohrmaschine enthält als rotierbaren Meißel eine Bohrstange mit einem Schneidwerkzeug, das in die Bohrung eingeschoben wird, sowie eine zur Bohrstange synchron bewegbare Werkstückhalterung. Mit einer solchen Feinbohrmaschine könnte in die Innenoberfläche der Bohrung bei geeigneter Ansteuerung, beispielsweise konstanter radialer Auslenkung des Schneidwerkzeugs und konstanter Vorschubgeschwindigkeit, eine schraubenförmige Rille gemäß der vorliegenden Erfindung eingebracht werden.

Aus der US 3,023,060 A, der AT 198 069 B sowie der GB 2 023 238 A sind jeweils Kolben mit einer eine Rillenstruktur aufweisenden Bolzenbohrung bekannt.

Nachteilig bei derartigen Rillenstrukturen gemäß dem Stand der Technik ist insbesondere deren aufwändige Herstellung mittels eines separaten Arbeitsschrittes, die zu hohen Herstellungskosten und/oder Herstellungsdauern führt.

Die vorliegende Erfindung beschäftigt sich daher mit der Aufgabe, für ein Verfahren zum Herstellen einer Rillenstruktur in einer Innenoberfläche einer Bolzenbohrung eines Kolbens sowie für einen solchen Kolben verbesserte oder zumindest alternative Ausführungsformen anzugeben, die sich insbesondere durch eine im Vergleich vereinfachte Herstellung und/oder reduzierte Herstellungskosten und/oder reduzierte Herstellungsdauer auszeichnen.

Diese Aufgabe wird erfindungsgemäß durch die Merkmale des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Rillenstruktur in einer Innenoberfläche einer Bolzenbohrung eines Kolbens mittels eines Meißels bestehend aus einer Bohrstange mit einem oder mehreren Schneidwerkzeugen herzustellen, wobei das Schneidwerkzeug beim Einschieben der Bohrstange in die Bolzenbohrung eine erste Rille mit einer ersten Tiefe und einer ersten Breite b₁ in die Innenoberfläche und beim anschließenden Herausbewegen der Bohrstange aus der Bolzenbohrung eine zweite Rille der Rillenstruktur mit einer von der ersten Tiefe unterschiedlichen zweiten Tiefe in die Innenoberfläche einbringt. Hierdurch kann also mit dem gleichen Werkzeug, nämlich einem einzigen auf der Bohrstange angebrachten Schneidwerkzeug, eine solche Rillenstruktur mit Rillen unterschiedlicher Tiefe realisiert werden. Zudem erfolgt das Einbringen der Rillenstruktur in die Innenoberfläche der Bolzenbohrung vereinfacht und mit verkürzter Dauer, da sowohl beim Einschieben der Bohrstange in die Bolzenbohrung als auch beim Herausbewegen der Bohrstange aus der Bolzenbohrung Rillen in die Innenoberfläche der Bolzenbohrung eingebracht werden. Dem Erfindungsgedanken entsprechend wird die Rillenstruktur dadurch hergestellt, dass eine solche Bohrstange bereitgestellt wird, die rotierbar ist. Dabei wird die Bohrstange mit einer ersten Drehzahl n₁ in eine Rotationsrichtung gedreht und mit einer ersten Geschwindigkeit bzw. Vorschubgeschwindigkeit v₁ in die Bolzenbohrung eingeschoben. Alternativ können diese und andere Relativbewegungen auch durch ein entsprechendes Verschieben des Kolbens in der Werkstückhalterung bezogen auf eine ortsfest gelagerte Bohrstange ausgeführt werden. Es wird zumindest eine schraubenförmige erste Rille mit einer ersten Tiefe und einer ersten Breite in die Innenoberfläche eingebracht. Erfindungsgemäß wird die Bohrstange anschließend aus der Bolzenbohrung unter Beibehaltung der Rotationsrichtung bei einer zweiten Drehzahl n₂ mit einer zweiten Geschwindigkeit bzw. Vorschubgeschwindigkeit v₂ herausgezogen, wobei beim Herausziehen der Bohrstange zumindest eine schraubenförmige zweite Rille der Rillenstruktur mit einer zur ersten Tiefe unterschiedlichen zweiten Tiefe und einer zweiten Breite b₂ in die Innenoberfläche eingebracht wird.

Durch die Beibehaltung der Rotationsrichtung ist insbesondere kein Anhalten der Bohrstange notwendig, wodurch die Herstellung der Rillenstruktur wiederum vereinfacht und verkürzt wird. Hierdurch weisen zudem die zumindest eine schraubenförmige erste Rille und die zumindest eine zweite schraubenförmige Rille gegenläufige Schraubengangrichtungen auf.

Das Einbringen der jeweiligen Rille in die Innenoberfläche der Bolzenbohrung erfolgt durch eine relative radiale Verstellung der Innenoberfläche zum Schneidwerkzeug. Vorstellbar ist es dabei, dass die Bohrstange mit einem oder mehreren radial verstellbaren Schneidewerkzeugen versehen ist, welche zum Einbringen der Rillen in die Rillenstruktur radial verstellt werden. Vorstellbar ist es auch, das Einbringen der Rillen durch eine relative Bewegung zwischen dem Kolben bzw. der Innenoberfläche der Bolzenbohrung und der Bohrstange zu realisieren. Hierbei ist es insbesondere vorstellbar, den Kolben relativ zum Schneidwerkzeug quer zu einer entsprechenden Rotationsachse der Bohrstange und synchron zu deren Rotation zu bewegen. Ebenso kann die Bohrstange quer zu seiner Rotationsachse bewegt werden.

Die Tiefe und die Breite der jeweiligen Rille werden insbesondere durch eine entsprechende Anpassung der relativen Verstellung des Meißels zur Innenoberfläche an eine Rotationsgeschwindigkeit des Meißels bestimmt. Eine derartige Anpassung erfolgt insbesondere wie in der DE 44 42 218 A1 beschrieben.

Die unterschiedliche Tiefe der ersten und zweiten Rille kann auf verschiedene Arten erreicht werden. Beide Rillen können mit demselben Schneidwerkzeug erzeugt werden, wenn dieses zwischen der Einschubbewegung und dem Herausbewegen der Bohrstange in radialer Richtung verstellt wird, so dass es unterschiedlich tief in die Innenoberfläche der Bolzenbohrung einschneidet. In diesem Fall kann vorteilhafterweise auf eine synchrone Bewegung des Kolben bzw. der Werkstückhalterung verzichtet werden.

Alternativ kann durch eine zur Rotation der Bohrstange synchrone relative Bewegung des Kolbens quer Drehachse auch ohne die radiale Verstellung der Schneidwerkzeuge eine tiefere (bzw. flachere) zweite Rille in der Innenoberfläche erzeugt werden, wenn der Kolben beim Herausbewegen der Bohrstange an der bearbeiteten Stelle jeweils in Radialrichtung auf das Schneidwerkzeug zu (bzw. von diesem weg) verschoben ist. In beiden Fällen verändert sich in Abhängigkeit von der Geometrie des Schneidwerkzeugs mit der Tiefe auch die Breite der jeweils erzeugten Rille.

Ist eine synchrone Werkstückbewegung z.B. zur Erzeugung einer Formbohrung mit einer nichtzylindrischen Grundform der Innenoberfläche, wie in DE 44 42 218 A1, Fig.2 beschrieben, sowieso vorgesehen, kann vorteilhafterweise ggfs. auf eine radiale Verstellung bzw. Verstellbarkeit des Schneidwerkzeugs bezogen auf die Bohrstange verzichtet werden. In diesem Fall kann das Verfahren so variiert werden, dass beim Einschieben der Bohrstange durch geeignete Ansteuerung die gewünschte nichtzylindrische Innenoberfläche der Formbohrung mit einer ersten Rillenstruktur geschaffen wird, während beim Herausbewegen die zweite Rille relativ dazu um einen konstanten Wert tiefer eingeschnitten wird.

Selbstverständlich könnte beim Herausfahren der Bohrstange auch auf ein erneutes Abfahren der nichtzylindrischen Innenoberfläche verzichtet und als zweite tiefere Rille einfach eine zylindrische Schraubenform eingebracht werden, wenn deren gegenüber der Innenoberfläche der Formbohrung nun variierende Tiefe in Kauf genommen werden kann.

Weiterhin kann die zweite Rille mit anderer Tiefe auch durch ein eigenes zweites Schneidwerkzeug erzeugt werden, das auch an der Bohrstange angebracht ist. Es kann nach dem Einschieben der Bohrstange und Erzeugen der ersten Rille radial ausgefahren werden, um beim Herausbewegen der Bohrstange die zweite Rille in die Innenoberfläche der Bolzenbohrung einzuschneiden, während das erste Schneidwerkzeug nach dem Erzeugen der ersten Rille radial eingefahren und außer Eingriff gebracht werden kann. Vorteilhafterweise lassen sich mit verschiedenen Schneidwerkzeugen die Geometrien der ersten und zweiten Rille völlig unabhängig voneinander gestalten. Es können z.B. eine relativ breite flache erste Rille und eine tiefere, aber schmalere zweite Rille kombiniert werden, was mit einer einzigen, beim Ein- aus Ausfahren unterschiedlich tief eingreifenden Schneide nicht möglich ist.

In einer bevorzugten Ausführungsform bleibt nicht nur die Rotationsrichtung, sondern auch die Drehzahl der Bohrstange beim Einschieben und Herausbewegen gleich (n₁=n₂). Zum Erreichen von gewünschten Ganghöhen der ersten und zweiten schraubenförmigen Rillen brauchen in diesem Fall nur die Vorschubgeschwindigkeiten v₁, v₂ angepasst zu werden. Gemäß dem Zusammenhang gᵢ = vᵢ / nᵢ kann die Ganghöhe g aber alternativ oder zusätzlich auch durch die jeweilige Bohrstangendrehzahl beeinflusst werden, insbesondere wenn die erste Drehzahl nicht der zweiten Drehzahl entspricht (n₁≠n₂).

Erfindungsgemäß wird die Bohrstange mit einer beliebigen ersten Vorschubgeschwindigkeit v₁ und einer unterschiedlichen zweiten Vorschubgeschwindigkeit v₂ bewegt.

Bei bevorzugten Ausführungsformen ist die zweite Vorschubgeschwindigkeit v₂, mit der die Bohrstange aus der Bolzenbohrung herausbewegt wird, größer als die erste Vorschubgeschwindigkeit v₁, mit der die Bohrstange in die Bolzenbohrung eingeschoben wird. Das heißt, dass der Meißel unter Beibehaltung der Rotationsrichtung mit einer im Vergleich zur ersten Geschwindigkeit höheren zweiten Geschwindigkeit herausbewegt wird. Hierdurch weist die zweite Rille bei gleich bleibender Drehzahl n₁=n₂ eine höhere Steigung bzw. eine größere Ganghöhe auf als die zumindest eine erste Rille. Dementsprechend kann der Anteil der Innenoberfläche, der mit der zumindest einen zweiten Rille versehen ist kleiner sein als der Anteil der Innenoberfläche, der mit der zumindest ersten Rille versehen ist.

Bevorzugt ist es, wenn die zweite Tiefe der zumindest einen zweiten Rille größer ist als die erste Tiefe der zumindest einen ersten Rille. Das heißt, dass beim Herausbewegen des Meißels zumindest eine solche schraubenförmige zweite Rille der Rillenstruktur mit einer zur ersten Tiefe größeren zweiten Tiefe in die Innenoberfläche eingebracht wird. Dadurch weist die Rillenstruktur also zumindest eine solche zweite Rille auf, die tiefer ausgebildet ist als die zumindest eine erste Rille. Dementsprechend kann im Bereich der zumindest einen zweiten Rille mehr Schmiermittel gespeichert werden, während im Bereich der zumindest einen ersten Rille mehr Traganteil für einen in der Bolzenbohrung gelagerten Bolzen bereitsteht.

In einer bevorzugten Ausführungsform kann sowohl eine ausreichende Schmiermittelversorgung als auch ein ausreichend hoher Traganteil der Innenoberfläche zur Aufnahme der Gasdrucklast erreicht werden, wenn die als Schmierstoffreservoir dienende tiefere Rille mindestens 25% und höchstens 50%, besonders bevorzugt etwa 40%, der Innenoberfläche einnimmt. Als Verhältnis aus Breite und Ganghöhe der zweiten Rille entspricht dies: 0,25 ≤ b₂ / g₂ ≤ 0,5, bzw. b₂ / g₂ ≈ 0,4.

Gemäß bevorzugter Ausführungsformen ist die zweite Breite der zumindest zweiten Rille größer als die erste Breite der zumindest einen ersten Rille. Das heißt, dass beim Herausbewegen der Bohrstange zumindest eine solche schraubenförmige zweite Rille der Rillenstruktur mit einer zur ersten Breite größeren zweiten Breite in die Innenoberfläche eingebracht wird. Möglich ist es allerdings auch, entweder mit demselben, weniger tief einschneidenden Schneidwerkzeug oder mit einem anderen Schneidwerkzeug eine kleinere Breite der zweiten Rille verglichen mit der Breite der ersten Rille zu erreichen.

In einer vorteilhaften Ausführungsform ist die zweite Rille tiefer als die erste Rille. Das bedeutet, dass zunächst beim Einfahren der Bohrstange die gesamte Innenoberfläche der Bolzenbohrung mit der flacheren ersten Rillenstruktur versehen wird, während beim anschließenden Ausfahren tiefere zweite Rillen mit vorzugsweise größerer Ganghöhe eingebracht werden. Auf diese Weise wird vermieden, dass (bei umgekehrter Reihenfolge) das Schneidwerkzeug beim Schneiden der flachen ersten Rille zeitweilig in die bereits vorhandenen tieferen zweite Rille gerät und der damit jeweils verbundene Wechsel der auf das Schneidwerkzeug wirkenden Kraft die Bearbeitungsqualität beeinträchtigen kann.

Mit dem erfindungsgemäßen Verfahren ist es prinzipiell möglich, erste Rillen und zweite Rillen mit einer beliebigen Tiefe in die Innenoberfläche der Bolzenbohrung einzubringen.

Bevorzugt ist es, wenn die erste Rille mit einer Tiefe von bevorzugt etwa 1 µm in die Innenoberfläche eingebracht wird. Die zweite Tiefe der zumindest einen zweiten Rille beträgt bevorzugt bis zu 20 µm, besonders bevorzugt etwa 5 µm. Die Rotationsgeschwindigkeit bzw. die Drehzahl , mit der die Bohrstange gedreht wird, kann prinzipiell beliebig sein, sofern eine Anpassung der Drehzahl an die übrigen Bewegungsparameter insofern vorliegt, als die Rillen mit der gewünschten Tiefe und/oder Breite und/oder Steigung bzw. Ganghöhe in die Innenoberfläche eingebracht werden.

Hierbei kann die Drehzahl der Bohrstange, insbesondere zwischen dem Einschieben und dem Herausbewegen, variieren. Das heißt, dass die erste Drehzahl n₁ und die zweite Drehzahl n₂ jeweils oder relativ zueinander variieren können.

Der Kolben kommt in einer Brennkraftmaschine zum Einsatz. Über die Bolzenbohrung kann der Kolben insbesondere mit einem Pleuel verbunden sein, wozu ein zugehöriger Bolzen in der Bolzenbohrung gelagert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: einen Schnitt durch einen Kolben einer Brennkraftmaschine während der Herstellung einer Rillenstruktur,
- Fig. 2: den mit II gekennzeichneten Bereich aus Figur 1 nach der Herstellung der Rillenstruktur,
- Fig. 3: den mit III gekennzeichneten Bereich aus Figur 1 nach der Herstellung der Rillenstruktur.

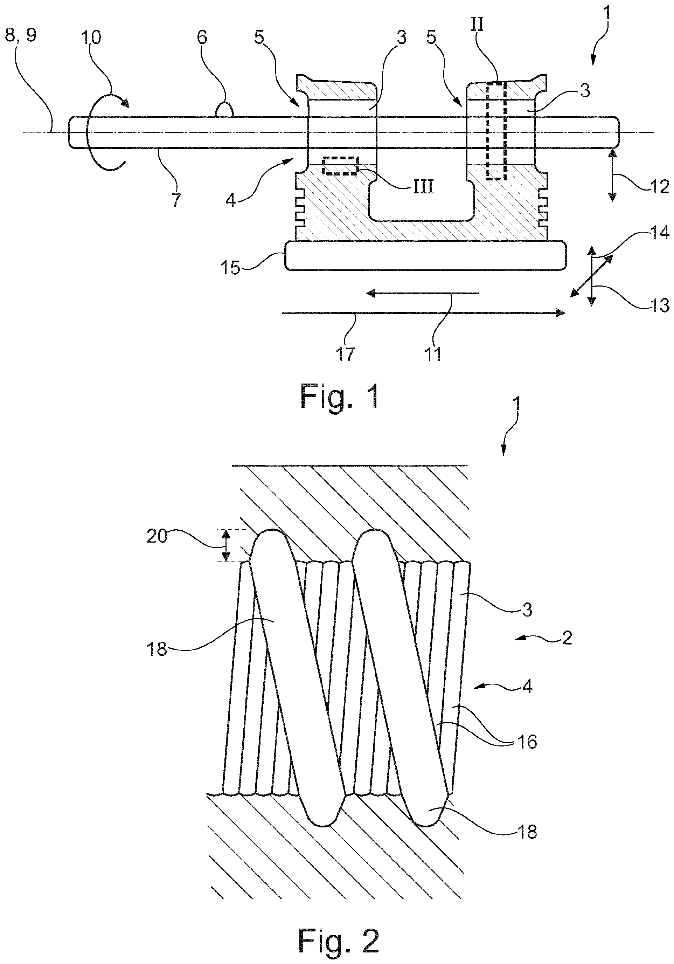

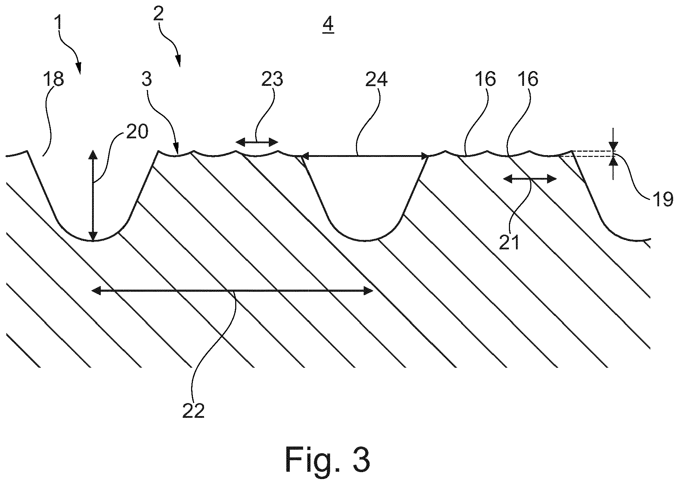

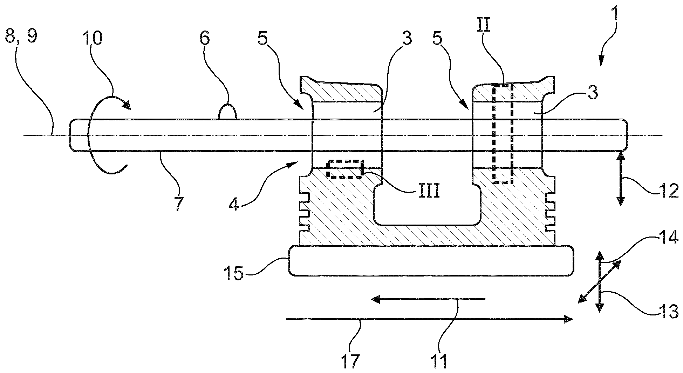

In Figur 1 ist ein Kolben 1 einer nicht gezeigten Brennkraftmaschine im Schnitt dargestellt, wobei in Figur 1 ein Zustand während der Herstellung einer Rillenstruktur 2 (siehe Figur 2 und 3) zu sehen ist. Figur 2 zeigt den mit II gekennzeichneten Bereich in Figur 1 nach der Herstellung der Rillenstruktur 2, während in Figur 3 der mit III gekennzeichnete Bereich in Figur 1 nach der Herstellung der Rillenstruktur 2 zu sehen ist.

Die Rillenstruktur 2 wird in einer Innenoberfläche 3 einer Bolzenbohrung 4 des Kolbens 1 eingebracht, wobei die Bolzenbohrung 4 zwei miteinander fluchtende Bohrabschnitte 5 aufweist. Zum Versehen der Innenoberfläche 3 der Bolzenbohrung 4 mit der Rillenstruktur 2 wird zunächst ein Meißel mit einem Schneidwerkzeug 6 bereitgestellt, das drehfest an einer Bohrstange 7 angebracht, die um eine Rotationsachse 8, die der Achse 9 der Bohrstange 7 entspricht, in einer Rotationsrichtung 10 rotiert wird. Hierdurch wird auch das Schneidwerkzeug 6 in der Rotationsrichtung 10 gedreht. Die Bohrstange 7 wird zunächst in eine Einschubrichtung 11 in die Bolzenbohrung 4 eingeschoben, während sie in der Rotationsrichtung 10 rotiert. Beim Einschieben der Bohrstange 7 in die Bolzenbohrung 4 erfolgt zudem eine relative radiale Bewegung zwischen dem Schneidwerkzeug 6 und der Innenoberfläche 3 der Bolzenbohrung 4. Dies kann durch eine mit einem Pfeil 12 angedeutete radiale Bewegung der Bohrstange 7 und somit des Schneidwerkzeugs 6 erfolgen. Alternativ oder zusätzlich kann der Kolben 1 in einer ersten quer zur Rotationsachse 8 verlaufenden Bewegungsrichtung 13 und/oder in einer quer zur Rotationsachse 8 und quer zu ersten Bewegungsrichtung 13 verlaufenden zweiten Bewegungsrichtung 14 bewegt werden. Die Bewegung des Kolbens 1 in die erste Bewegungsrichtung 13 und/oder zweite Bewegungsrichtung 14 kann mit Hilfe einer Halterung 15 realisiert sein, in der der Kolben 1 gehalten ist. Beim Einschieben der Bohrstange 7 in die Bolzenbohrung 4 erfolgt durch besagte relative radiale Bewegung zwischen dem Schneidwerkzeug 6 und der Innenoberfläche 3 das Einbringen zumindest einer schraubenförmigen ersten Rille 16 (siehe Figur 2 und Figur 3) in die Innenoberfläche 3 der Bolzenbohrung 4. Dabei ist in Figur 1 ein Zustand während des Herstellens der Rillenstruktur 2 zu sehen, bei dem die Bohrstange 7 bereits gänzlich in die Bolzenbohrung 4 eingeschoben wurde und in der Einschubrichtung 11 aus der Bolzenbohrung 4 ausgetreten ist. Die ersten Rillen 16 sind hierbei in Figur 1 nicht dargestellt. Anschließend wird die Bohrstange 7 weiterhin in Rotationsrichtung 10 rotierend, jedoch in einer der Einschubrichtung 11 entgegengesetzten Auszugrichtung 17 bewegt, wodurch das Schneidwerkzeug 6 die Bolzenbohrung 4 ein zweites Mal durchläuft, während die Bohrstange 7 aus der Bolzenbohrung 4 herausbewegt wird. Beim Herausbewegen der Bohrstange 7 aus der Bolzenbohrung 4 wird in die Innenoberfläche 3 der Bolzenbohrung 4 durch besagte relative radiale Bewegung der Bohrstange 7 bzw. des Schneidwerkzeugs 6 zur Innenoberfläche 3 zumindest eine schraubenförmige zweite Rille 18 der Rillenstruktur 2 in die Innenoberfläche 3 eingebracht. Hierbei ist der Schraubendrehsinn der zumindest einen ersten Rille 16 und der zumindest einen zweiten Rille 18 entgegengesetzt. Im gezeigten Beispiel ist im jeweiligen Bohrabschnitt 5 der Bolzenbohrung 4 eine einzige solche erste Rille 16 und eine einzige solche zweite Rille 18 eingebracht, die sich schraubenförmig im Wesentlichen entlang des gesamten zugehörigen Bohrabschnitts 5 erstrecken.

Dabei weisen die erste Rille 16 und die zweite Rille 18 unterschiedliche, radial verlaufende Tiefen 19, 20 auf (siehe Figur 3). Das heißt, dass die erste Rille 16 eine erste Tiefe 19 aufweist, die von einer zweiten Tiefe 20 der zweiten Rille 18 unterschiedlich ist. Im gezeigten Ausführungsbeispiel ist dabei die zweite Tiefe 20 größer als die erste Tiefe 19.

Das Einschieben der Bohrstange 7 in die Bolzenbohrung 4 erfolgt mit einer ersten Vorschubgeschwindigkeit, während das Herausbewegen der Bohrstange 7 aus der Bolzenbohrung 4 mit einer zweiten Vorschubgeschwindigkeit erfolgt, die sich von der ersten Vorschubgeschwindigkeit unterscheidet. Hierdurch weist die zumindest eine zweite Rille 18 eine andere Ganghöhe 22 auf als die zumindest eine erste Rille 16. Das heißt, dass eine erste Ganghöhe 21 der ersten Rille 16 sich von einer zweiten Ganghöhe 22 der zweiten Rille 18 unterscheidet, wobei die zweite Ganghöhe 22 im gezeigten Beispiel größer ist als die erste Ganghöhe 21. Dies wird insbesondere bei unveränderter Drehzahl der Bohrstange 7 dadurch erzielt, dass die zweite Vorschubgeschwindigkeit höher ist als die erste Vorschubgeschwindigkeit. Symbolisiert wird dieser Umstand dadurch, dass in Figur 1 der Pfeil der Einschubrichtung 11 kürzer ist als der Pfeil der Auszugrichtung 17.

Die erste Rille 16 weist zudem eine parallel zur Rotationsachse 9 bzw. in Einschubrichtung 11 oder Auszugrichtung 17 verlaufende erste Breite 23 auf, die sich von einer entsprechenden zweiten Breite 24 der zweiten Rille 18 unterscheidet, wobei die zweite Breite 24 im gezeigten Beispiel größer ist als die erste Breite 23.

Im gezeigten Beispiel sind die Tiefe 19, 20, die Ganghöhe 21, 22 sowie die Breite 23, 24 der jeweiligen Rille 16, 18 im Wesentlichen konstant. Es versteht sich jedoch, dass die Tiefe 19, 20 und/oder die Ganghöhe 21, 22 und/oder die Breite 23, 24 der jeweiligen Rille 16, 18, insbesondere entlang der zugehörigen Rille 16, 18, variieren können/kann.

## Patentansprüche

1. Verfahren zum Herstellen einer Rillenstruktur (2) in einer Innenoberfläche (3) einer Bolzenbohrung (4) eines Kolbens (1), mit den Verfahrensschritten:
- Bereitstellen einer rotierbaren Bohrstange (7) mit mindestens einem Schneidwerkzeug (6),
- Einschieben der in einer Rotationsrichtung (10) mit einer ersten Drehzahl n₁ rotierenden Bohrstange (7) mit einer ersten Vorschubgeschwindigkeit v₁ in die Bolzenbohrung (4) und Einbringen zumindest einer schraubenförmigen ersten Rille (16) der Rillenstruktur (2) mit einer ersten Tiefe (19) und einer ersten Breite (23) in die Innenoberfläche (3),
**dadurch gekennzeichnet,**
- **dass** die Bohrstange (7) anschließend aus der Bolzenbohrung (4) bei einer Drehzahl n₂ unter Beibehaltung der Rotationsrichtung (10) mit einer im Vergleich zur ersten Vorschubgeschwindigkeit v₁ unterschiedlichen zweiten Vorschubgeschwindigkeit v₂ herausbewegt wird, wobei beim Herausbewegen der Bohrstange (7) zumindest eine schraubenförmige zweite Rille (18) der Rillenstruktur (2) mit einer zur ersten Tiefe (19) unterschiedlichen zweiten Tiefe (20) in die Innenoberfläche (3) eingebracht wird,
- **dass** das Einbringen der jeweiligen Rille (16,18) in die Innenoberfläche der Bolzenbohrung (4) durch eine relative radiale Verstellung der Innenoberfläche zum Schneidwerkzeug (6) erfolgt.

2. Verfahren nach Anspruch 1,
**dadurch gekennzeichnet,**
**dass** die Bohrstange (7) aus der Bolzenbohrung (4) mit einer im Vergleich zur ersten Vorschubgeschwindigkeit v₁ höheren zweiten Vorschubgeschwindigkeit v₂ herausbewegt wird.

3. Verfahren nach Anspruch 1 oder 2,
**dadurch gekennzeichnet,**
**dass** beim Herausbewegen der Bohrstange (7) zumindest eine solche schraubenförmige zweite Rille (18) der Rillenstruktur (2) mit einer zur ersten Tiefe (19) größeren zweiten Tiefe (20) in die Innenoberfläche (3) eingebracht wird.

4. Verfahren nach einem der Ansprüche 1 bis 3,
**dadurch gekennzeichnet,**
**dass** beim Herausbewegen der Bohrstange (7) zumindest eine solche schraubenförmige zweite Rille (18) der Rillenstruktur (2) mit einer zur ersten Breite (23) größeren zweiten Breite (24) in die Innenoberfläche (3) eingebracht wird.

5. Verfahren nach einem der Ansprüche 1 bis 3,
**dadurch gekennzeichnet,**
**dass** beim Herausbewegen der Bohrstange (7) zumindest eine solche schraubenförmige zweite Rille (18) der Rillenstruktur (2) mit einer zur ersten Breite (23) kleineren zweiten Breite (24) in die Innenoberfläche (3) eingebracht wird.

6. Verfahren nach einem der Ansprüche 1 bis 5,
**dadurch gekennzeichnet,**
**dass** beim Herausbewegen der Bohrstange (7) zumindest eine solche schraubenförmige zweite Rille (18) der Rillenstruktur (2) mit einer im Vergleich zu einer ersten Ganghöhe (21) der ersten Rille (16) größeren zweiten Ganghöhe (22) in die Innenoberfläche (3) eingebracht wird.

7. Verfahren nach einem der Ansprüche 1 bis 6,
**dadurch gekennzeichnet,**
**dass** die Innenoberfläche (3) der Bolzenbohrung (4) beim Einbringen der ersten Rille (16) durch Radiusvariationen in Umfangsrichtung und/oder Axialrichtung als eine Formbohrung ausgebildet wird.

8. Verfahren nach einem der Ansprüche 1 bis 7,
**dadurch gekennzeichnet,**
**dass** zumindest eine solche zweite Rille (18) eine zweite Ganghöhe (22) und eine zweite Breite (24) aufweist, wobei die zweite Breite (24) mindestens 25% und höchstens 50%, vorzugsweise etwa 40%, der zweiten Ganghöhe (22) beträgt.

9. Verfahren nach einem der Ansprüche 1 bis 8,
**dadurch gekennzeichnet,**
**dass** die erste Rille (16) mittels des mindestens einen Schneidwerkzeugs (6) und die zweite Rille (18) mittels eines an der Bohrstange (7) angebrachten anderen Schneidwerkzeugs in die Innenoberfläche (3) eingebracht wird.

10. Verfahren nach einem der Ansprüche 1 bis 9,
**dadurch gekennzeichnet,**
- **dass** die zumindest eine erste Rille (16) mit einer ersten Tiefe (19) von bis zu 2 µm, bevorzugt ca. 1 µm, in die Innenoberfläche (3) eingebracht wird, und/oder
- **dass** die zumindest eine zweite Rille (18) mit einer zweiten Tiefe (20) von bis zu 20 µm, bevorzugt ca. 5 µm, in die Innenoberfläche (3) eingebracht wird.

## Claims

1. Method for producing a groove structure (2) in an inner surface (3) of a pin bore (4) of a piston (1), comprising the method steps:
- providing a rotatable boring bar (7) with at least one cutting tool (6),
- advancing the boring bar (7), which rotates in a rotational direction (10) at a first speed n₁, at a first feed speed v₁ into the pin bore (4) and introducing at least one helical first groove (16) of the groove structure (2) into the inner surface (3) with a first depth (19) and a first width (23),
**characterised in**
- **that** the boring bar (7) is retracted subsequently out of the pin bore (4) at a speed n₂ while maintaining the rotational direction (10) at a second feed speed v₂ different from the first feed speed v₁, wherein when retracting the boring bar (7) at least one helical second groove (18) of the groove structure (2) is introduced into the inner surface (3) with a second depth (20) different from the first depth (19),
- **that** the introduction of the respective groove (16, 18) into the inner surface of the bolt bore (4) is performed by a relative radial adjustment of the inner surface to the cutting tool (6).

2. Method according to claim 1,
**characterised in**
**that** the boring bar (7) is retracted from the pin bore (4) at a second feed speed v₂ higher than the first feed speed v₁.

3. Method according to claim 1 or 2,
**characterised in**
**that**, when retracting the boring bar (7), at least one such helical second groove (18) of the groove structure (2) is introduced into the inner surface (3) with a second depth (20) that is greater than the first depth (19).

4. Method according to any of claims 1 to 3,
**characterised in**
**that**, when retracting the boring bar (7), at least one such helical second groove (18) of the groove structure (2) is introduced into the inner surface (3) with a second width (24) that is greater than the first width (23).

5. Method according to any of claims 1 to 3,
**characterised in**
**that**, when retracting the boring bar (7), at least one such helical second groove (18) of the groove structure (2) is introduced into the inner surface (3) with a second width (24) that is smaller than the first width (23).

6. Method according to any of claims 1 to 5,
**characterised in**
**that**, when retracting the boring bar (7), at least one such helical second groove (18) of the groove structure (2) is introduced into the inner surface (3) with a second pitch (22) that is greater than a first pitch (21) of the first groove (16).

7. Method according to any of claims 1 to 6,
**characterised in**
**that** the inner surface (3) of the pin bore (4) is designed as a shaped bore during the introduction of the first groove (16) by varying the radius in circumferential direction and/or axial direction.

8. Method according to any of claims 1 to 7,
**characterised in**
**that** at least one such second groove (18) has a second pitch (22) and a second width (24), wherein the second width (24) is at least 25% and at most 50%, preferably about 40%, of the second pitch (22).

9. Method according to any of claims 1 to 8,
**characterised in**
**that** the first groove (16) is introduced into the inner surface (3) by means of the at least one cutting tool (6) and the second groove (18) is introduced by means of another cutting tool attached to the boring bar (7).

10. Method according to any of claims 1 to 9,
**characterised in**
- **that** the at least one first groove (16) is introduced into the inner surface (3) with a first depth (19) of up to 2 µm, preferably about 1 µm, and/or
- **that** the at least one second groove (18) is introduced into the inner surface (3) with a second depth (20) of up to 20 µm, preferably about 5 µm.

## Revendications

1. Procédé pour fabriquer une structure rainurée (2) dans une surface intérieure (3) d'un alésage d'axe (4) d'un piston (1), avec les étapes de procédé consistant à :
- fournir une tige d'alésage (7) rotative avec au moins un outil de coupe (6),
- insérer la tige d'alésage (7) tournant dans une direction de rotation (10) avec une première vitesse de rotation n₁ avec une première vitesse d'avance v₁ dans l'alésage d'axe (4) et ménager au moins une première rainure (16) hélicoïdale de la structure rainurée (2) avec une première profondeur (19) et une première largeur (23) dans la surface intérieure (3),
**caractérisé en ce**
- **que** la tige d'alésage (7) est ensuite déplacée à l'extérieur de l'alésage d'axe (4) à une vitesse de rotation n₂ avec maintien de la direction de rotation (10) avec une seconde vitesse d'avance v₂ différente en comparaison de la première vitesse d'avance v₁, dans lequel, lorsque la tige d'alésage (7) est déplacée à l'extérieur, au moins une seconde rainure (18) hélicoïdale de la structure rainurée (2) avec une seconde profondeur (20) différente de la première profondeur (19) est ménagée dans la surface intérieure (3),
- **que** le fait de ménager la rainure (16, 18) respective dans la surface intérieure de l'alésage d'axe (4) s'effectue par un déplacement radial relatif de la surface intérieure par rapport à l'outil de coupe (6).

2. Procédé selon la revendication 1,
**caractérisé en ce**
**que** la tige d'alésage (7) est déplacée à l'extérieur de l'alésage d'axe (4) avec une seconde vitesse d'avance v₂ plus élevée en comparaison de la première vitesse d'avance v₁.

3. Procédé selon la revendication 1 ou 2,
**caractérisé en ce**
**que**, lorsque la tige d'alésage (7) est déplacée à l'extérieur, au moins une telle seconde rainure (18) hélicoïdale de la structure rainurée (2) avec une seconde profondeur (20) plus grande par rapport à la première profondeur (19) est ménagée dans la surface intérieure (3).

4. Procédé selon l'une quelconque des revendications 1 à 3,
**caractérisé en ce**
**que**, lorsque la tige d'alésage (7) est déplacée à l'extérieur, au moins une telle seconde rainure (18) hélicoïdale de la structure rainurée (2) avec une seconde largeur (24) plus grande par rapport à la première largeur (23) est ménagée dans la surface intérieure (3).

5. Procédé selon l'une quelconque des revendications 1 à 3,
**caractérisé en ce**
**que**, lorsque la tige d'alésage (7) est déplacée à l'extérieur, au moins une telle seconde rainure (18) hélicoïdale de la structure rainurée (2) avec une seconde largeur (24) plus petite par rapport à la première largeur (23) est ménagée dans la surface intérieure (3).

6. Procédé selon l'une quelconque des revendications 1 à 5,
**caractérisé en ce**
**que**, lorsque la tige d'alésage (7) est déplacée à l'extérieur, au moins une telle seconde rainure (18) hélicoïdale de la structure rainurée (2) avec un second pas (22) plus grand en comparaison d'un premier pas (21) de la première rainure (16) est ménagée dans la surface intérieure (3).

7. Procédé selon l'une quelconque des revendications 1 à 6,
**caractérisé en ce**
**que** la surface intérieure (3) de l'alésage d'axe (4), lorsque la première rainure (16) est ménagée, est réalisée en tant qu'alésage formé par des variations de rayon dans la direction périphérique et/ou direction axiale.

8. Procédé selon l'une quelconque des revendications 1 à 7,
**caractérisé en ce**
**qu'**au moins une telle seconde rainure (18) présente un second pas (22) et une seconde largeur (24), dans lequel la seconde largeur (24) atteint au moins 25 % et au plus 50 %, de préférence environ 40 %, du second pas (22).

9. Procédé selon l'une quelconque des revendications 1 à 8,
**caractérisé en ce**
**que** la première rainure (16) est ménagée dans la surface intérieure (3) au moyen de le au moins un outil de coupe (6) et la seconde rainure (18) au moyen d'un autre outil de coupe monté sur la tige d'alésage (7).

10. Procédé selon l'une quelconque des revendications 1 à 9,
**caractérisé en ce**
- **que** la au moins une première rainure (16) avec une première profondeur (19) allant jusqu'à 2 µm, de préférence d'approximativement 1 µm, est ménagée dans la surface intérieure (3), et/ou
- **que** la au moins une seconde rainure (18) avec une seconde profondeur (20) allant jusqu'à 20 µm, de préférence d'approximativement 5 µm, est ménagée dans la surface intérieure (3).
